**Europäisches Patentamt**

**European Patent Office**

**Office européen des brevets**

(19)

(11) Numéro de publication : **0 608 230 B1**

(12)

# FASCICULE DE BREVET EUROPEEN

(45) Date de publication du fascicule du brevet :
26.07.95 Bulletin 95/30

(51) Int. Cl.⁶ : **G01D 5/24,** G01B 7/14,
G01B 7/02, G01F 23/26

(21) Numéro de dépôt : **92908355.8**

(22) Date de dépôt : **16.04.92**

(86) Numéro de dépôt international :
**PCT/CA92/00166**

(87) Numéro de publication internationale :
**WO 92/19939 12.11.92 Gazette 92/28**

(54) **MESURE DYNAMIQUE ET SANS CONTACT DE DEPLACEMENT OU DE PERMITTIVITE A L'AIDE D'UN CAPTEUR CAPACITIF.**

(30) Priorité : **25.04.91 CA 2041231**

(43) Date de publication de la demande :
**03.08.94 Bulletin 94/31**

(45) Mention de la délivrance du brevet :
**26.07.95 Bulletin 95/30**

(84) Etats contractants désignés :
**AT BE CH DE DK ES FR GB GR IT LI LU MC NL SE**

(56) Documents cités :
**EP-A- 0 147 294**
**GB-A- 2 181 246**
**US-A- 2 962 641**
**US-A- 4 963 829**

(73) Titulaire : **HYDRO-QUEBEC**
**75 Ouest, Boulevard René Levesque**
**Montréal, Québec H2Z 1A4 (CA)**

(72) Inventeur : **CLOUTIER, Marius**
**568, de Bienville**
**Boucherville, Québec J4B 2Z4 (CA)**
Inventeur : **SAVARD, Sylvain**
**614, de la Coulée**
**Ste Julie, Québec J3E 1J6 (CA)**
Inventeur : **BOURGEOIS, Jean-Marc**
**2843, Berthon**
**Longueuil, Québec J4M 1Y4 (CA)**
Inventeur : **LALONDE, François**
**140 Malo**
**Varennes, Québec J3X 1C4 (CA)**

(74) Mandataire : **Thébault, Jean-Louis et al**
**Cabinet Thébault S.A.**
**1 Allées de Chartres**
**F-33000 Bordeaux (FR)**

EP 0 608 230 B1

## Description

La présente invention a pour objet une méthode de mesure dynamique et sans contact du déplacement d'une matière conductrice par rapport à un capteur capacitif constitué de deux plaques conductrices parallèles, superposées, isolées électriquement l'une de l'autre, et alimentées par un signal haute fréquence à une tension prédéterminée, le capteur capacitif étant relié a un dispositif capable de détecter une valeur de courant, ainsi qu'une méthode de mesure dynamique et sans contact de la permittivité d'un diélectrique entre une pièce conductrice et un capteur capacitif du type décrit précédemment.

L'invention se rapporte plus particulièrement à une méthode de mesure dynamique et sans contact de déplacement qui peut être avantageusement utilisée pour mesurer de façon permanente et relativement simple le déplacement axial d'un arbre de machine tournante au niveau d'un joint d'accouplement ou pour mesurer le niveau d'un réservoir, ainsi qu'à une méthode de mesure dynamique et sans contact de la permittivité d'un diélectrique qui peut être avantageusement utilisée aussi pour mesurer le niveau d'un réservoir ou pour surveiller de façon permanente et relativement simple le changement éventuel de composition d'un corps circulant à travers un conduit.

Faisant partie de l'art, le brevet américain No. 4,693,829 émis le 16 octobre 1990 au nom de J.A. WEREB décrit un analyseur de rotation d'un arbre tournant, comprenant un transducteur (capteur) formé d'un condensateur ayant deux plaques superposées de surface commune dynamiquement variable, alimenté au moyen d'une source de tension continue maintenue à une tension constante. Un courant est généré lorsque et seulement lorsque la capacité du transducteur (la surface du condensateur) varie. Il s'agit alors de mesurer à ce moment (lorsque la capacité varie) le courant généré par le transducteur ensuite pour calculer et déterminer le déplacement. L'analyseur ne peut effectuer des mesures de déplacement que lorsque la pièce cible est en train de se déplacer (tourner) et que la capacité du transducteur varie dans le temps.

Le brevet américain No. 2,962,641 émis le 29 novembre 1961 au nom de F.L. MALTBY et al. décrit un appareil faisant appel à un capteur placé dans un pont capacitif. La mesure est liée à un déséquilibre du pont, ce qui fait alors actionner un mécanisme de rétroaction incluant un moteur, visant à rétablir l'équilibre du pont en faisant varier adéquatement la capacité d'un des condensateurs du pont. Le mécanisme en jeu est basé sur la modulation d'un signal de rétroaction résultant du déséquilibre du pont. La capacité du câblage reliant le capteur au pont a une grande influence sur la mesure qui se fait par ailleurs par rapport à la valeur d'une impédance associée au pont.

Le brevet canadien No. 1,191,261 émis le 30 juillet 1985 au nom d'HYDRO-QUEBEC décrit un appareil ainsi qu'une méthode de mesure dynamique et sans contact de la distance séparant les surfaces d'une première pièce qui peut être conductrice faiblement espacée de la deuxième et reliée à la masse, tels que le sont le stator et le rotor d'une génératrice électrique, lesquels appareils et méthodes peuvent être utilisés de façon permanente sans modification importante ni encombrement excessif et ce avec des résultats précis et fiables même en présence de champs magnétiques intenses et de variations de température.

L'appareil mentionné ci-dessus est constitué d'un capteur fait de deux pièces conductrices parallèles, superposées et isolées électriquement l'une de l'autre, et alimentées par un signal haute fréquence entre 100 KHz et 10 MHz à une tension prédéterminée entre 5 et 100 Volts, reliées à un dispositif capable de détecter une valeur de courant qui lui-même est relié à un dispositif pouvant effectuer un traitement sur la valeur de courant détecté, tel un ordinateur.

Ce capteur lorsqu'il est utilisé forme un condensateur avec la pièce conductrice reliée à la masse, de sorte que la capacité soit déterminée par l'équation connue suivante:

$$C = \frac{KAr}{D} \quad (1)$$

dans laquelle:

$K =$   $\varepsilon_o \varepsilon_r$, $\varepsilon_o$ étant la permittivité du vide (8.854 pF/m) et $\varepsilon_r$ étant la permittivité relative du diélectrique entre la plaque du capteur la plus proche de la pièce conductrice et celle-ci;

$Ar$   est la surface de recouvrement de la pièce conductrice sur la plaque du capteur; et

$D$   est la distance entre la surface de la plaque du capteur la plus proche de la pièce conductrice et celle-ci.

Lorsque le condensateur ainsi formé est soumis à un signal haute fréquence, un courant mesurable est induit dans les plaques du capteur, dont l'intensité répond à l'équation suivante:

$$i = \omega CV \quad (2)$$

$\omega =$   $2\pi f$, $f$ étant la fréquence du signal émis;

$V$   est la différence de potentiel entre la plaque du capteur la plus proche de la pièce conductrice et celle-ci: et

$C$   est la capacité mentionnée précédemment.

L'équation (1) montre que pour une valeur diélectrique $K$ et une surface de recouvrement $Ar$ constantes, la capacité $C$, et donc le courant $i$ de l'équation (2), varie selon l'inverse de la distance $D$ séparant le capteur de la pièce conductrice, donnant lieu à la méthode mentionnée pour la mesure dynamique et sans contact de la distance entre la plaque d'un capteur capacitif la plus proche d'une pièce conductrice et celle-ci.

Comme on peut aisément le constater, l'appareil peut servir similairement pour effectuer la mesure d'un autre paramètre variable de l'équation (1), soit la permittivité K ou la surface de recouvrement Ar, pourvu que les autres paramètres soient fixes.

Un premier objet de la présente invention est donc de proposer une nouvelle méthode faisant appel à l'appareil mentionné précédemment pour permettre d'effectuer une mesure dynamique et sans contact du déplacement d'une matière conductrice reliée à la masse par rapport à un capteur capacitif, cette première méthode étant caractérisée en ce que:

(a) on positionne le capteur capacitif près de et à une distance fixe perpendiculaire à un plan dans lequel la matière conductrice s'étend, les plaques du capteur capacitif étant substantiellement parallèles au plan en question, de sorte qu'un déplacement de cette matière conductrice dans le plan mentionné modifie sa surface de recouvrement sur le capteur capacitif;

(b) on détecte le courant induit par le signal haute fréquence dans le capteur capacitif, ce courant détecté variant de façon directement proportionnelle à la surface de recouvrement de la matière conductrice sur le capteur capacitif; et

(c) on détermine la valeur du déplacement de ladite matière conductrice par rapport au capteur capacitif en fonction de la valeur du courant détecté.

Cette méthode n'est pas restreinte aux machines à turbine ou aux réservoirs puisqu'elle permet de mesurer le déplacement de toute matière conductrice par rapport au capteur, pourvu que la surface de recouvrement de la matière conductrice sur le capteur varie lors du déplacement.

Un deuxième objet de la présente invention est de proposer une nouvelle méthode faisant aussi appel à l'appareil mentionné précédemment pour permettre d'effectuer une mesure dynamique et sans contact de la permittivité d'un diélectrique entre une pièce conductrice reliée à la masse et un capteur capacitif, cette deuxième méthode étant caractérisée en ce que:

(a) on positionne le capteur capacitif près de et à une distance fixe perpendiculaire à une surface de la pièce conductrice de sorte que le diélectrique dont la permittivité est à mesurer se trouve entre la surface de la pièce conductrice et le capteur capacitif;

(b) on détecte le courant induit par le signal haute fréquence dans le capteur capacitif, ce courant détecté variant de façon directement proportionnelle à la permittivité du diélectrique entre la pièce conductrice et le capteur capacitif; et

(c) on détermine la valeur de la permittivité du diélectrique entre la pièce conductrice et le capteur capacitif en fonction de la valeur du courant détecté.

Là encore, cette méthode n'est pas restreinte aux réservoirs ou à la détection d'un changement de composition d'un corps dans un conduit puisqu'elle permet de mesurer la permittivité d'un diélectrique entre un capteur capacitif et n'importe quelle pièce conductrice.

L'invention ainsi que ses divers avantages ressortiront mieux à la lecture de la description non-restrictive de réalisations possibles faite en référence aux dessins annexés dans lesquels:

- la figure 1 montre un schéma de principe des méthodes selon l'invention
- la figure 2 est un schéma illustrant la première méthode selon l'invention pour la mesure du déplacement d'une matière conductrice plus large que le capteur capacitif;
- la figure 3 montre une courbe caractéristique de la valeur du courant mesuré pour une réalisation de l'invention selon la figure 2;
- la figure 4a illustre la première méthode selon l'invention pour la mesure du déplacement d'un joint d'accouplement entre une turbine à vapeur et un alternateur;
- la figure 4b est une vue détaillée de côté du joint d'accouplement montré à la figure 4a;
- la figure 4c est une vue détaillée de dessus du joint d'accouplement montré à la figure 4a;
- la figure 5 illustre la première méthode selon l'invention pour effectuer une mesure de déplacement à l'aide de plusieurs capteurs;
- la figure 6a illustre la première méthode selon l'invention pour effectuer la mesure de niveau d'un liquide conducteur ou fortement polaire dans un réservoir électriquement conducteur;
- la figure 6b illustre la première méthode selon l'invention pour effectuer la mesure de niveau d'un liquide conducteur ou fortement polaire dans un réservoir électriquement isolant;
- la figure 6c illustre la deuxième méthode selon l'invention pour effectuer la mesure de niveau d'un liquide isolant dans un réservoir électriquement conducteur;
- la figure 6d illustre la deuxième méthode selon l'invention pour effectuer la mesure de niveau d'un liquide isolant dans un réservoir électriquement isolant;
- la figure 7 illustre la deuxième méthode selon l'invention pour la détection d'une contamination d'eau dans de l'huile circulant dans un conduit;
- la figure 8 montre un schéma du circuit du dispositif d'alimentation et de détection utilisé dans le cadre de la présente invention; et
- la figure 9 est un schéma bloc montrant les principales f-onctions de l'appareil utilisé par les méthodes selon l'invention.

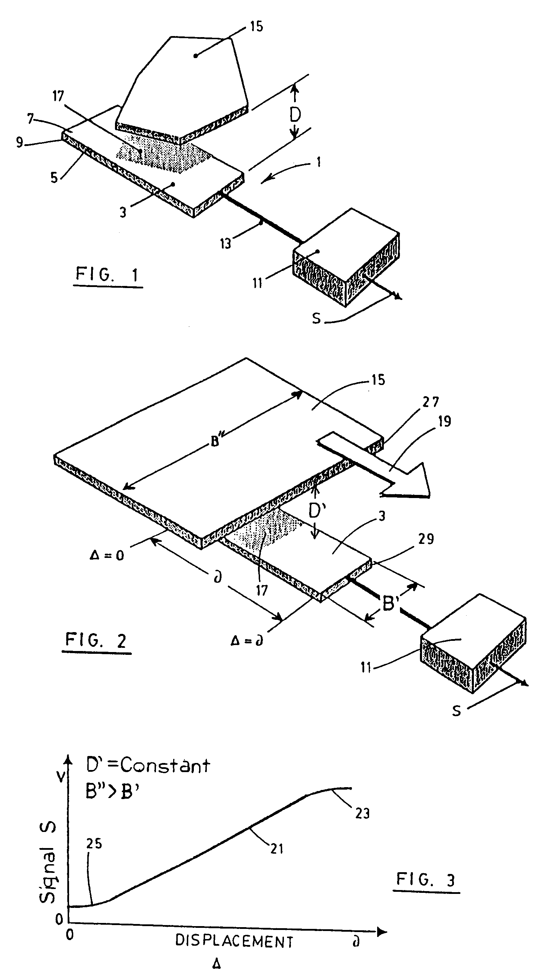

Se référant à la figure 1 des dessins annexés, l'appareillage 1 utilisé pour la mise en oeuvre des méthodes selon l'invention comprend au moins un capteur capacitif 3 constitué de deux plaques 5 et 7 qui sont conductrices, superposées et isolées électriquement l'une de l'autre par un isolant 9 approprié, un dispositif d'alimentation et de détection 11 pour alimenter les deux plaques 5 et 7 de chaque capteur avec un même signal haute fréquence à une même tension et pour détecter la valeur du courant induit dans les plaques 5 et 7 par le signal haute fréquence, et un câble 13 reliant les plaques 5 et 7 de chaque capteur au dispositif 11. Celui-ci génère un signal électrique S, en fonction du courant détecté, permettant d'apporter un traitement à l'aide d'un appareil tel un ordinateur par exemple, pour effectuer la mesure relative aux méthodes selon l'invention.

Le signal haute fréquence alimentant les plaques 5 et 7 du capteur doit de préférence avoir une fréquence se trouvant dans la bande de 100 KHz à 10 MHz et une tension se situant entre 5 et 100 volts crête à crête, ceci dans le but d'éviter les problèmes éventuels de bruit parasite, d'impédance de retour ou d'isolation. On peut aussi diminuer l'effet du bruit parasite en "jouant" sur la dimension des plaques 5 et 7 et sur la distance les séparant.

L'appareil de traitement doit tenir compte de la non-linéarité due à la construction et aux paramètres physiques du capteur capacitif 3, donc être préalablement calibré pour réaliser une conversion précise du courant mesuré en fonction du paramètre désiré à mesurer pour les méthodes selon l'invention.

Dans la première méthode selon l'invention, soit celle de la mesure dynamique et sans contact d'un déplacement, le capteur capacitif 3 est positionné par un moyen approprié à une faible distance fixe D de la matière conductrice 15 de sorte que ses plaques 5 et 7 soient parallèles au plan dans lequel s'étend la matière conductrice 15. Dans ce plan, la surface commune à la matière conductrice 15 et au capteur capacitif 3 constitue une surface de recouvrement 17. Il est essentiel selon la présente méthode que l'aire de la surface de recouvrement 17 varie lors d'un déplacement de la matière conductrice 15 par rapport au capteur capacitif 3 puisque le courant mesuré est directement proportionnel à cette aire et que ce courant mesuré fait précisément l'objet de la mesure du déplacement.

La figure 2 montre une réalisation de la première méthode selon l'invention, soit celle de la mesure d'un déplacement dans laquelle la matière conductrice 15 est plus large que le capteur capacitif 3 et celui-ci de forme rectangulaire. Bien que cette forme ne soit pas essentielle, elle procure dans la présente réalisation des caractéristiques particulièrement intéressantes qui sont représentées à la figure 3 sous forme graphique.

La figure 3 montre la linéarité qui découle de la réalisation représentée à la figure 2, entre le déplacement dans le sens de la flèche 19 de la matière conductrice 15 par rapport au capteur capacitif 3 et le signal électrique S généré par le dispositif 11. Cette caractéristique vient du fait que la surface de recouvrement 17 augmente linéairement par rapport au déplacement mentionné. La courbe 21 est de forme principalement linéaire mais subit une déflexion 23 et 25 à chaque extrémité lorsque l'arête 27 de la matière conductrice 15 franchit le rebord 29 du capteur capacitif 3.

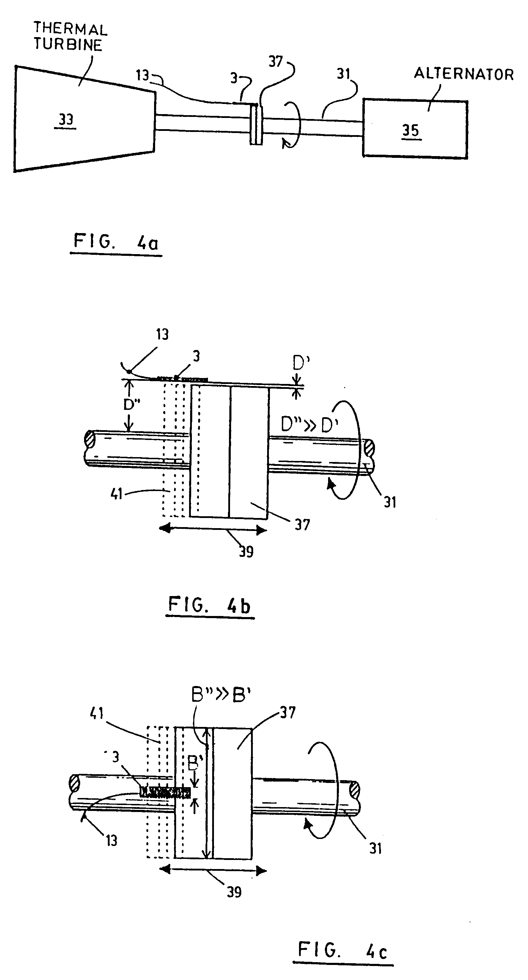

Tel qu'illustré à la figure 4a, la première méthode selon l'invention de mesure d'un déplacement peut être utilisée pour mesurer l'élongation d'un arbre tournant 31 reliant une turbine à vapeur 33 à un alternateur 35. Le joint d'accouplement 37 agit comme matière conductrice et doit donc préalablement être relié à la masse. Comme montré dans les agrandissements 4b et 4c, le capteur 3 est positionné à une distance fixe D' du joint d'accouplement 37, parallèlement à celui-ci de façon à mesurer un déplacement éventuel du joint 37 dans le sens de la flèche 39, représenté par les pointillés 41. Il est nécessaire que la distance D″ entre le capteur capacitif 3 et l'arbre 31 soit suffisamment grande par rapport à la distance D' de sorte que l'arbre 31 ait un effet capacitif négligeable vis-à-vis le capteur 3 et ne vienne pas affecter la mesure du déplacement. Puisque la largeur B' du capteur capacitif 3 est plus petite que la largeur B″ du joint d'accouplement 37 et du fait que ce capteur est de forme rectangulaire, la relation entre le déplacement et le signal S est donc linéaire, diminuant ainsi la complexité du traitement subséquent de ce signal.

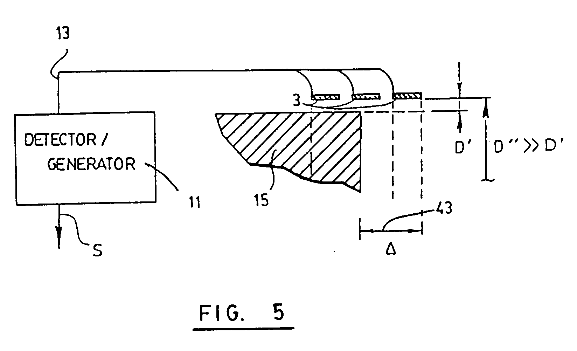

Se référant maintenant à la figure 5, lorsque le déplacement dans le sens de la flèche 43 de la matière conductrice 15 est trop grand pour n'être mesuré que par un capteur, il est possible de recourir à plusieurs capteurs capacitifs 3 positionnés adéquatement conformément à la première méthode selon l'invention de mesure d'un déplacement, et de manière à ce que le déplacement de la matière conductrice 15 modifie la surface de recouvrement d'au moins un capteur 3, changeant ainsi la valeur du courant mesuré. Une façon simple d'obtenir ce résultat est de positionner les capteurs 3 linéairement les uns à la suite des autres.

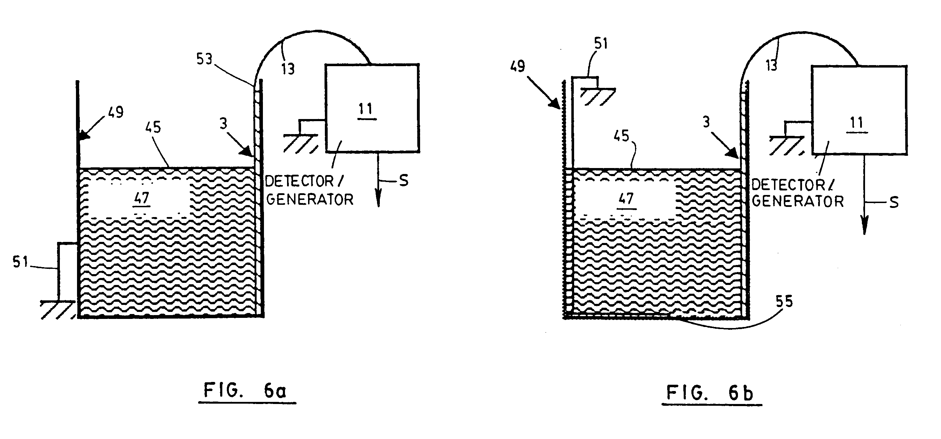

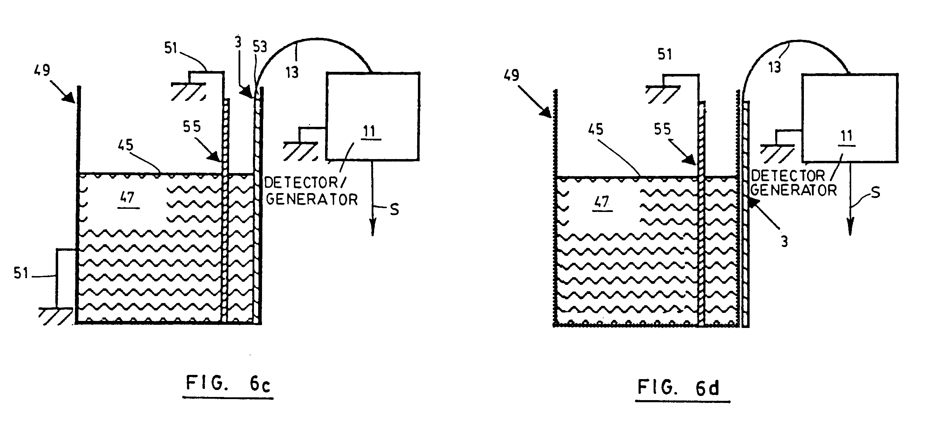

Tel qu'illustré à la figure 6a, la première méthode selon l'invention de mesure d'un déplacement est mise en pratique pour mesurer le niveau 45 d'une solution 47 électriquement conductrice ou fortement polaire, comme de l'eau dans certaines conditions ou du mercure par exemple, se trouvant dans un réservoir 49 également électriquement conducteur. Cette solution agit alors comme matière conductrice et peut être reliée à la masse 51 par le biais du réservoir 49 lui aussi conducteur. Le capteur capacitif 3 peut être positionné à même la paroi intérieure 53 du réservoir 49 par simple collage ou par un moyen approprié, et doit être obligatoirement recouvert d'une couche protectrice isolante et étanche. Pour pouvoir mesurer un niveau 45 quelconque de solution 47 dans le réservoir 49, il suffit que le capteur 3 soit aussi long que la hauteur de la paroi 53 du réservoir 49. Dans le cas où le réservoir 49 est électriquement isolant, tel qu'illustré à la figure 6b, la solution 47 électriquement conductrice ou fortement polaire est reliée à la masse 51 à l'aide d'une électrode secondaire de masse 55, pouvant être constituée d'une simple plaque métallique par exemple, disposée au fond du réservoir 49 à l'intérieur ou à l'extérieur.

Se référant maintenant à la figure 6c, l'appareil 1 (montré à la Figure 1) est maintenant utilisé pour la mise en oeuvre de la deuxième méthode selon l'invention de mesure dynamique et sans contact de la permittivité d'un diélectrique pour mesurer le niveau 45 d'une solution 47 électriquement isolante et de constante diélectrique relative plus grande que celle de l'air (1 unité) tel que celle de l'huile, de l'essence ou d'autres dérivés du pétrole, par exemple. Dans cette réalisation, le signal de courant détecté comporte une composante constante non-nulle (offset) qui peut être adéquatement corrigée ou compensée lorsque le réservoir est vide. Cette composante non-nulle est d'autant plus importante que la constante diélectrique de la solution approche celle de l'air. Une électrode secondaire de masse 55 au moins aussi longue que le capteur 3, constituée d'une simple plaque métallique par exemple, est reliée à la masse 51 et disposée à proximité du capteur capacitif 3, lui-même disposé sur la paroi intérieure 53 du réservoir 49. La protection du capteur 3 n'est pas nécessaire mais souhaitable. Dans le cas où le réservoir 49 est électriquement isolant, tel qu'illustré à la figure 6d, le capteur 3 peut être disposé sur la paroi intérieure ou extérieure du réservoir 49.

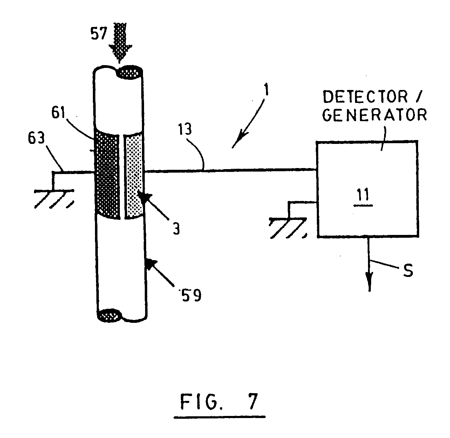

Dans la figure 7, la deuxième méthode selon l'invention est mise en pratique pour détecter la composition d'un corps (schématisé par la flèche 57), possiblement altéré par une contamination, à l'intérieur d'un conduit 59 électriquement isolant. Le capteur 3 est positionné à même la paroi du conduit 59 de sorte que le corps 57 passe inévitablement entre une électrode 61 reliée à la masse 63 et ce capteur, changeant la permittivité auparavant mesurée lors d'une contamination. Connaissant la valeur de la permittivité du corps 57 ou en effectuant des tests pour la déterminer, il serait possible de relier le dispositif d'alimentation et de détection 11 à un système d'alarme préalablement ajusté pour signaler un changement de composition du corps 57 lorsqu'il est détecté.

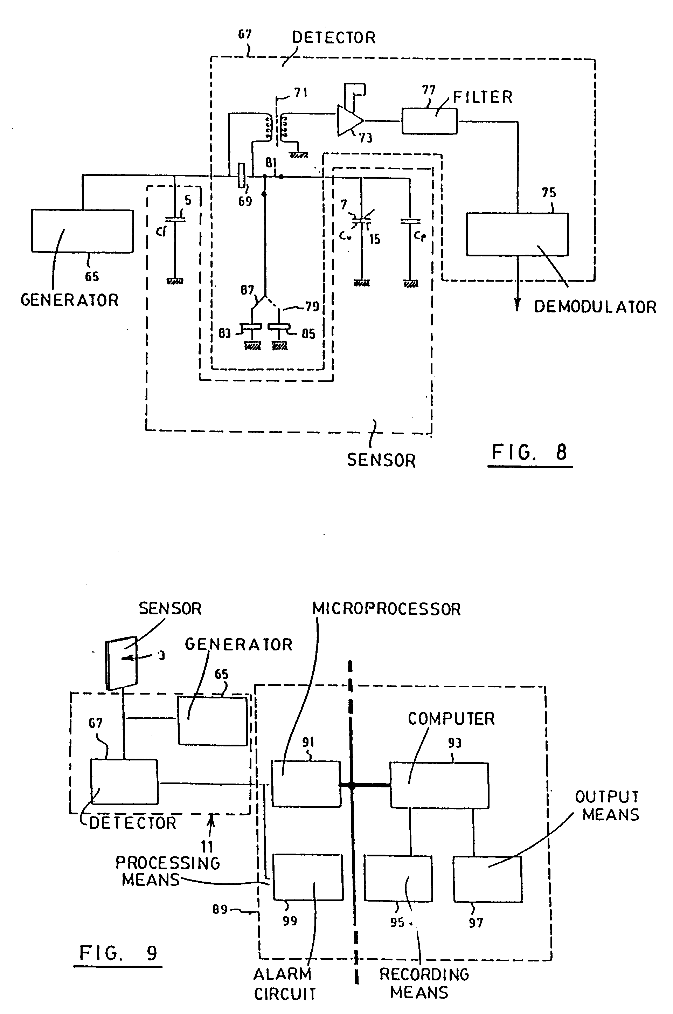

La figure 8 donne un schéma du circuit du dispositif d'alimentation et de détection 11 de l'appareil 1 (montré à la Figure 1) utilisé selon l'invention. Sur ce schéma, on retrouve un générateur de signal haute fréquence 65. Ce générateur alimente la plaque 5 du capteur 3 qui forme une capacité fixe Cf avec l'ambiant. La plaque 7 du capteur 3 forme, avec la surface de la matière conductrice 15, une capacité variable Cv. Il existe enfin une capacité parasite propre à chaque type de capteur. Cette capacité parasite est désignée par le symbole Cp. Un détecteur de courant 67 comprend une faible impédance 69 montée en série entre le générateur 65 et la plaque 7 du capteur. Le détecteur de courant 67 comprend également un circuit d'isolation relié à l'impédance 69 pour mesurer de façon isolée le signal de tension haute fréquence aux bornes de celle-ci et pour extraire de ce signal ainsi mesuré un signal proportionnel au courant de mesure. Ce circuit peut comprendre un transformateur d'isolation 71 relié, d'un côté, aux bornes de l'impédance 69 et, de l'autre côté, à un amplificateur à gain ajustable 73. Cet amplificateur est à son tour relié à un démodulateur d'amplitude de type connu 75 qui reçoit le signal de l'amplificateur via un filtre 77. La sortie du démodulateur 75 qui fournit le signal requis proportionnel au courant de mesure est reliée à des moyens de traitement appropriés 89 décrits ci-après plus en détail. Pour permettre une correction automatique de dérive de l'appareil, le détecteur 67 peut également incorporer des moyens de vérification 79 pour remplacer momentanément la capacité variable Cv. Ces moyens de vérification branchables à l'aide d'un interrupteur 81, sont constitués de deux impédances connues 83 et 85 permettant d'obtenir deux signaux repères (vérification haute et basse). Ces impédances 83 et 85 sont commutées par un relais 87.

Il convient de mentionner que l'utilisation de tels moyens de vérification 79 est facultative. Dans certains cas, elle permet, avant chaque prise de données, de tenir compte des dérives des amplificateurs ainsi que du générateur, en plus de permettre une détermination facile du gain et des offsets.

Tel qu'illustré sur la figure 9, les moyens de traitement 89 sont reliés au détecteur de courant 67.

Selon un premier exemple possible de réalisation, ces moyens de traitement 89 peuvent être constitués par un circuit de traitement incluant un microprocesseur 91 dont le but est d'assurer un traitement et un emmagasinage des signaux de courant détectés par le détecteur de courant 67 jusqu'à ce qu'ils soient requis. Lorsque l'information est requise, les signaux peuvent alors être transmis par le micro-processeur 91 à un ordinateur 93 qui peut être pourvu de moyens d'emmagasinage externe 95 (disques ou autres) et de moyens de visualisation 97 (imprimantes ou autres). Dans le cas où plusieurs capteurs 3 sont utilisés, l'ordinateur 93 peut être relié à un micro-processeur 91 associé à chaque capteur 3 de façon à pouvoir traiter individuellement des signaux mémorisés dans chacun des micro-processeurs 91 associés à chacun des capteurs 3. Des lignes plus larges illustrées sur la figure 9 montrent, à titre d'exemple, des connexions possibles vers d'autres micro-processeurs 91. L'introduction des données qui fournit la relation courant-déplacement ou courant-permittivité pour chaque type de capteur est faite une fois pour chaque type de capteur en laboratoire. Tel que précédemment indiqué, il peut être nécessaire d'effectuer une vérification avant chaque prise de données pour tenir compte des dérives de l'amplificateur et du générateur.

Selon un autre exemple possible de réalisation, les moyens de traitement 89 peuvent être constitués par un circuit d'alarme 99. Ce dernier peut être monté à la place du circuit de traitement ou conjointement avec celui-ci. Le but de ce circuit d'alarme 99 est d'immédiatement fournir un signal d'alarme si la valeur du courant détecté correspond à un déplacement ou une permittivité critique prédéterminé. Ce circuit d'alarme 99 peut être connecté en permanence, ce qui le rend très avantageux notamment dans le cas de la surveillance continue et permanente d'une machine tournante, niveau d'un réservoir ou contamination d'un corps à l'intérieur d'un conduit.

**Revendications**

1. Méthode de mesure dynamique et sans contact du déplacement d'une matière conductrice (15) reliée à la masse par rapport à un capteur capacitif (3) constitué de deux plaques (5,7) conductrices parallèles, superposées, isolées électriquement l'une de l'autre, et alimentées par un signal haute fréquence à une tension prédéterminée, ledit capteur capacitif (3) étant relié à un dispositif (11) capable de détecter une valeur de courant, ladite méthode étant caractérisée en ce que:

    (a) on positionne ledit capteur capacitif (3) près de et à une distance fixe (D) perpendiculaire à un plan dans lequel ladite matière conductrice (15) s'étend, lesdites plaques (5,7) étant substantiellement parallèles audit plan, de sorte qu'un déplacement de ladite matière conductrice (15) dans ledit plan modifie la surface de recouvrement (17) de cette matière conductrice (15) sur ledit capteur capacitif (3);
    (b) on détecte le courant induit par ledit signal haute fréquence dans ledit capteur capacitif (3), ledit courant détecté variant de façon directement proportionnelle à ladite surface de recouvrement (17) de ladite matière conductrice (15) sur ledit capteur capacitif (3); et
    (c) on détermine la valeur du déplacement de ladite matière conductrice (15) par rapport audit capteur capacitif (3) en fonction de la valeur du courant détecté.

2. Méthode selon la revendication 1, caractérisée en ce que la détection du courant s'effectue en mesurant de façon isolée le signal de tension haute fréquence aux bornes d'une faible impédance (69) montée en série entre un moyen d'alimentation (65) du signal haute fréquence et la plaque (7) du capteur (3) la plus proche de la matière conductrice (15), et en extrayant de ce signal mesuré un signal proportionnel au courant détecté.

3. Méthode selon la revendication 1 ou 2, caractérisée en ce que la détermination de la valeur du déplacement de ladite matière conductrice (15) par rapport audit capteur capacitif (3) en fonction de la valeur du courant détecté s'effectue par l'intermédiaire de dispositifs électroniques (89) conçus ou programmés en fonction des divers paramètres physiques dudit capteur capacitif (3), pour déterminer la valeur du déplacement réel correspondant à la valeur du courant détecté tout en tenant compte des effets parasites qui sont propres audit capteur capacitif (3) et peuvent affecter la valeur dudit signal de courant ainsi détecté.

4. Méthode selon la revendication 1, caractérisée en ce que plus d'un capteur capacitif (3) sont positionnés à l'étape (a) de sorte que le déplacement de ladite matière conductrice (15) modifie ladite surface de recouvrement (17) sur au moins un desdits capteurs capacitifs (3).

5. Méthode selon la revendication 1, caractérisée en ce que:

    - ladite matière conductrice (15) est l'arbre (31) d'une machine tournante (33,35), le déplacement mesuré étant celui d'un joint d'accouplement (37) de l'arbre (31) tournant par rapport audit capteur capacitif (3).

6. Méthode selon la revendication 1, caractérisée en ce que:

    - ladite matière conductrice (47) est contenue dans un réservoir (49), le déplacement mesuré étant celui du niveau (45) de ladite matière conductrice (47) par rapport audit capteur capacitif (3).

7. Méthode de mesure dynamique et sans contact de la permittivité d'un diélectrique (47) entre une pièce conductrice (55) reliée à la masse (51) et un capteur capacitif (3) constitué de deux plaques (5,7) conductrices parallèles, superposées, isolées électriquement l'une de l'autre, et alimentées par un signal haute fréquence à une tension prédéterminée, ledit capteur capacitif (3) étant relié à un dispositif (11) capable de détecter une valeur de courant, ladite méthode étant caractérisée en ce que:

    (a) on positionne ledit capteur capacitif (3) près de et à une distance fixe perpendiculaire à une surface de ladite pièce conductrice (55) de sorte que le diélectrique (47) dont la permittivité est à mesurer se trouve entre ladite surface de la pièce conductrice (55) et ledit capteur capacitif (3);

(b) on détecte le courant induit par ledit signal haute fréquence dans ledit capteur capacitif (3), ledit courant détecté variant de façon directement proportionnelle à ladite permittivité dudit diélectrique (47) entre ladite pièce conductrice (55) et ledit capteur capacitif (3); et

(c) on détermine la valeur de la permittivité dudit diélectrique (47) entre ladite pièce conductrice (55) et ledit capteur capacitif (3) en fonction de la valeur du courant détecté.

8. Méthode selon la revendication 7, caractérisée en ce que la détection du courant s'effectue en mesurant de façon isolée le signal de tension haute fréquence aux bornes d'une faible impédance (69) montée en série entre un moyen d'alimentation (65) du signal haute fréquence et la plaque (7) du capteur (3) la plus proche de la matière conductrice (55), et en extrayant de ce signal mesuré un signal proportionnel au courant détecté.

9. Méthode selon la revendication 7, caractérisée en ce que la détermination de la permittivité du diélectrique (47) entre ladite pièce conductrice (55) et ledit capteur capacitif (3) en fonction de la valeur du courant détecté s'effectue par l'intermédiaire de dispositifs électroniques (89) conçus ou programmés en fonction des divers paramètres physiques dudit capteur capacitif (3), pour déterminer la valeur de la permittivité réelle correspondant à la valeur du courant détecté tout en tenant compte des effets parasites qui sont propres audit capteur capacitif (3) et peuvent affecter la valeur dudit signal de courant ainsi détecté.

10. Méthode selon la revendication 7, caractérisée en ce que plus d'un capteur capacitif (3) sont positionnés à l'étape (a) de sorte que la permittivité dudit diélectrique (47) soit déterminée à différents endroits.

11. Méthode selon la revendication 7, caractérisée en ce que:

- ledit diélectrique (47) est contenu dans un réservoir (49), la valeur de la permittivité mesurée étant modifiée par une variation du niveau (45) dudit diélectrique (47) entre ladite pièce conductrice (55) et ledit capteur capacitif (3).

12. Méthode selon la revendication 7, caractérisée en ce que:

- ledit diélectrique (57) est à l'intérieur d'un conduit (59) électriquement isolant, la valeur de la permittivité mesurée étant modifiée par une contamination éventuelle dudit diélectrique (57).

**Claims**

1. Method for the dynamic contactless measurement of the movement of an earthed conductive material (15) with respect to a capacitive sensor (3) consisting of two parallel conductive plates (5, 7) placed one on top of the other and isolated electrically from each other, and fed with a high-frequency signal at a predetermined voltage, the said capacitive sensor (3) being connected to a device (11) capable of detecting a current value, the said method being characterised in that:

(a) the said capacitive sensor (3) is positioned close to and at a fixed distance (D) perpendicular to a plane in which the said conductive material (15) lies, the said plates (5, 7) being substantially parallel to the said plane, so that a movement of the said conductive material (15) in the said plane modifies the surface area (17) on the said capacitive sensor (3) covered by this conductive material (15);

(b) the current induced by the said high-frequency signal in the said capacitive sensor (3) is detected, the said current detected varying directly with the said surface area (17) on the said capacitive sensor (3) covered by the said conductive material (15); and

(c) the value of the movement of the said conductive material (15) with respect to the said capacitive sensor (3) is determined as a function of the value of the current detected.

2. Method according to Claim 1, characterised in that the current is detected by measuring in an isolated manner the high-frequency voltage signal at the terminals of a low impedance (69) connected in series between a means (65) for feeding the high-frequency signal and the plate (7) of the sensor (3) which is closest to the conductive material (15), and by extracting from this measured signal a signal proportional to the current detected.

3. Method according to Claim 1 or 2, characterised in that the value of the movement of the said conductive material (15) with respect to the said capacitive sensor (3) is determined as a function of the value of the current detected by means of electronic devices (89) designed or programmed in accordance with the various physical parameters of the said capacitive sensor (3), in order to determine the value of the actual movement corresponding to the value of the current detected whilst taking account of any parasitic effects which are inherent in the said capacitive sensor (3) and may affect the value of the said current signal thus detected.

4. Method according to Claim 1, characterised in that more than one capacitive sensor (3) is positioned at step (a) so that the movement of the said conductive material (15) modifies the said surface area covered (17) on at least one of the said capacitive sensors (3).

5. Method according to Claim 1, characterised in that:
   - the said conductive material (15) is the shaft (31) of a rotary machine (33, 35), the movement measured being that of a coupling joint (37) on the shaft (31) rotating with respect to the said capacitive sensor (3).

6. Method according to Claim 1, characterised in that:
   - the said conductive material (47) is contained in a reservoir (49), the movement measured being that of the level (45) of the said conductive material (47) with respect to the said capacitive sensor (3).

7. Method for the dynamic contactless measurement of the permittivity of a dielectric (47) between a conductive piece (55) connected to earth (51) and a capacitive sensor (3) consisting of two parallel conductive plates (5, 7) placed one on top of the other and isolated electrically from each other, and fed with a high-frequency signal at a predetermined voltage, the said capacitive sensor (3) being connected to a device (11) capable of detecting a current value, the said method being characterised in that:
   (a) the said capacitive sensor (3) is positioned close to and at a fixed distance perpendicular to a surface of the said conductive piece (55) so that the dielectric (47) whose permittivity is to measured is situated between the said surface of the conductive piece (55) and the said capacitive sensor (3);
   (b) the current induced by the said high-frequency signal in the said capacitive sensor (3) is detected, the said current detected varying directly with the said permittivity of the said dielectric (47) between the said conductive piece (55) and the said capacitive sensor (3); and
   (c) the value of the permittivity of the said dielectric (47) between the said conductive piece (55) and the said capacitive sensor (3) is determined as a function of the value of the current detected.

8. Method according to Claim 7, characterised in that the current is detected by measuring in an isolated fashion the high-frequency voltage signal at the terminals of a low impedance (69) connected in series between a means (65) of feeding the high-frequency signal and the plate (7) of the sensor (3) which is closest to the conductive material (55), and by extracting from this measured signal a signal proportional to the current detected.

9. Method according to Claim 7, characterised in that the permittivity of the dielectric (47) between the said conductive piece (55) and the said capacitive sensor (3) is determined, as a function of the value of the current detected, by means of electronic devices (89) designed or programmed in accordance with the various physical parameters of the said capacitive sensor (3), in order to determine the value of the actual permittivity corresponding to the value of the current detected while taking account of any parasitic effects which are inherent in the said capacitive sensor (3) and may affect the value of the said current signal thus detected.

10. Method according to Claim 7, characterised in that more than one capacitive sensor (3) is positioned at step (a) so that the permittivity of the said dielectric (47) is determined at different points.

11. Method according to Claim 7, characterised in that:
    - the said dielectric (47) is contained in a reservoir (49), the value of the permittivity measured being modified by a variation in the level (45) of the said dielectric (47) between the said conductive piece (55) and the said capacitive sensor (3).

12. Method according to Claim 7, characterised in that:
    - the said dielectric (57) is inside an electrically insulating pipe (59), the value of the permittivity measured being modified by any contamination of the said dielectric (57).

**Patentansprüche**

1. Verfahren zum dynamischen kontaktlosen Messen einer Verschiebung eines leitfähigen Materials (15), das mit Masse verbunden ist, in bezug auf einen kapazitiven Sensor (3), der aus zwei leitfähigen, parallelen, übereinander angeordneten, elektrisch gegeneinander isolierten Platten (5, 7), die durch ein Hochfrequenzsignal vorbestimmter Spannung versorgt werden, gebildet wird, wobei besagter kapazitiver Sensor (3) mit einer Vorrichtung (11) verbunden ist, die fähig ist, eine Stromgröße zu erfassen, wobei besagtes Verfahren dadurch gekennzeichnet ist, daß

(a) man besagten kapazitiven Sensor (3) nahe zu und in einem festen Abstand (D) senkrecht zu einer Ebene positioniert, in der sich besagtes leitfähiges Material (15) erstreckt, wobei besagte Platten (5, 7) im wesentlichen parallel zu besagter Ebene derart verlaufen, daß eine Verschiebung besagten leitfähigen Materials (15) in besagter Ebene die Überdeckungsfläche (17) dieses leitfähigen Materials (15) über besagtem kapazitivem Sensor (3) ändert;

(b) man den durch besagtes Hochfrequenzsignal in besagtem kapazitivem Sensor (3) induzierten Strom erfaßt, wobei besagter erfaßter Strom direkt proportional zu besagter Überdeckungsfläche (17) besagten leitfähigen Materials (15) Über besagtem kapazitivem Sensor (3) variiert; und

(c) man die Größe der Verschiebung besagten leitfähigen Materials (15) in bezug auf besagten kapazitiven Sensor (3) als Funktion der erfäßten Stromgröße bestimmt.

2. Verfahren nach Anspruch 1, dadurch gekennzeichnet, daß die Stromerfassung vorgenommen wird, indem das Hochfrequenzspannungssignal isoliert an den Klemmen einer kleinen Impedanz (69) gemessen wird, die in Reihe zwischen einem Versorgungsmittel (65) für das Hochfrequenzsignal und der am nächsten zu dem leitfähigen Material (15) befindlichen Platte (7) des Sensors (3) geschaltet ist, und aus diesem gemessenen Signal ein Signal proportional zu dem erfäßten Strom extrahiert wird.

3. Verfahren nach Anspruch 1 oder 2, dadurch gekennzeichnet, daß die Bestimmung des Wertes der Verschiebung besagten leitfähigen Materials (15) in bezug auf besagten kapazitiven Sensor (3) als Funktion der erfäßten Stromgröße durch Zwischenschaltung von elektronischen Einrichtungen (89) bewirkt wird, die geeignet oder programmiert sind, als Funktion von verschiedenen physikalischen Parametern besagten kapazitiven Sensors (3) die Größe der realen Verschiebung entsprechend der erfaßten Stromgröße unter in Betracht Ziehen parasitärer Effekte zu bestimmen, die besagten kapazitivem Sensor (3) eigen sind und die Größe besagten, so erfäßten Stromsignals beeinträchtigen können.

4. Verfahren nach Anspruch 1, dadurch gekennzeichnet, daß mehr als ein kapazitiver Sensor (3) im Schritt (a) derart positioniert werden, daß die Verschiebung besagten leitfähigen Materials (15) besagte Überdeckungsfläche (17) über wenigstens einem der besagten kapazitiven Sensoren (3) ändert.

5. Verfahren nach Anspruch 1, dadurch gekennzeichnet, daß

- besagtes leitfähiges Material (15) die Welle (31) einer umlaufenden Maschine (33, 35) ist, wobei die gemessene Verschiebung diejenige einer Kopplungsverbindung (37) der Welle (31) ist, die sich in bezug zu besagtem kapazitivem Sensor (3) dreht.

6. Verfahren nach Anspruch 1, dadurch gekennzeichnet, daß

- besagtes leitfähiges Material (47) in einem Reservoir (49) enthalten ist, wobei die gemessene Verschiebung diejenige des Niveaus (45) besagten leitfähigen Materials (47) in bezug auf besagten kapazitiven Sensor (3) ist.

7. Verfahren zum dynamischen kontaktlosen Messen der Dielektrizitätskonstanten eines Dielektrikums (47) zwichen einem leitfähigen Teil (55), das mit Masse verbunden ist, und einem kapazitiven Sensor (3), der aus zwei leitfähigen, parallelen, übereinander angeordneten, elektrisch gegeneinander isolierten Platten (5, 7), die durch ein Hochfrequenzsignal vorbestimmter Spannung versorgt werden, gebildet wird, wobei besagter kapazitiver Sensor (3) mit einer Vorrichtung (11) verbunden ist, die fähig ist, eine Stromgröße zu erfassen, wobei besagtes Verfahren dadurch gekennzeichnet ist, daß

(a) man besagten kapazitiven Sensor (3) nahe zu und in einem festen Abstand (D) senkrecht zu einer Fläche besagten leitfähigen Teils (55) derart positioniert, daß das Dielektrikum (47), dessen Dielektrizitätskonstante zu messen ist, sich zwischen besagter Fläche des leitfähigen Teils (55) und besagtem kapazitivem Sensor (3) befindet;

(b) man den durch besagtes Hochfrequenzsignal in besagtem kapazitivem Sensor (3) induzierten Strom erfaßt, wobei besagter erfaßter Strom direkt proportional zu besagter Dielektrizitätskonstante besagten Dielektrikums (47) zwischen besagtem leitfähigem Teil (55) und besagtem kapazitivem Sensor (3) variiert; und

(c) man die Größe der Dielektrizitätskonstanten besagten Dielektrikums (47) zwischen besagtem leitfähigem Teil (55) und besagtem kapazitivem Sensor (3) als Funktion der erfäßten Stromgröße bestimmt.

8. Verfahren nach Anspruch 7, dadurch gekennzeichnet, daß die Stromerfassung vorgenommen wird, indem das Hochfrequenzspannungssignal isoliert an den Klemmen einer kleinen Impedanz (69) gemessen wird, die in Reihe zwischen einem Versorgungsmittel (65) für das Hochfrequenzsignal und der am nächsten zu dem leitfähigen Material (55) befindlichen Platte (7) des Sensors (3) geschaltet ist, und aus diesem gemessenen Signal ein Signal proportional zu dem erfaßten Strom extrahiert wird.

9. Verfahren nach Anspruch 7, dadurch gekennzeichnet, daß die Bestimmung der Dielektrizitätskonstanten des Dielektrikums (47) zwischen besagten leitfähigem Teil (55) und besagtem kapazitivem Sensor (3) als Funktion der erfaßten Stromgröße durch Zwischenschaltung von elektronischen Einrichtungen (89) bewirkt wird, die geeignet oder programmiert sind, als Funktion von verschiedenen physikalischen Parametern besagten kapazitiven Sensors (3) die Größe der realen Dielektrizitätskonstanten entsprechend der erfaßten Stromgröße unter in Betracht Ziehen parasitären Effekte zu bestimmen, die besagten kapazitivem Sensor (3) eigen sind und die Größe besagten, so erfaßten Stromsignals beeinträchtigen können.

10. Verfahren nach Anspruch 7, dadurch gekennzeichnet, daß mehr als ein kapazitiver Sensor (3) im Schritt (a) derart positioniert werden, daß die Dielektrizitätskonstante besagten Dielektrikums (47) an verschiedenen Stellen bestimmt wird.

11. Verfahren nach Anspruch 7, dadurch gekennzeichnet, daß

- besagtes Dielektrikum (47) in einem Reservoir (49) enthalten ist, wobei die gemessene Dielektrizitätskonstante durch Änderung des Niveaus (45) besagten Dielektrikums (47) zwischen besagtem leitfähigem Teil (55) und besagtem kapazitivem Sensor (3) modifiziert wird.

12. Verfahren nach Anspruch 7, dadurch gekennzeichnet, daß

- besagtes Dielektrikum (57) in Innern einer elektrisch isolierenden Leitung (59) enthalten ist, wobei die gemessene Größe der Dielektrizitätskonstanten durch eine eventuelle Kontamination besagten Dielektrikums (57) modifiziert wird.

FIG. 1

FIG. 2

D'=Constant
B">B'

Signal S

DISPLACEMENT

Δ

FIG. 3

THERMAL
TURBINE

37

31

ALTERNATOR

13

3

33

35

FIG. 4a

13

3

D'

D"

D">> D'

41

37

31

39

FIG. 4b

B">> B'

41

37

3

B'

13

31

39

FIG. 4c

FIG. 5

FIG. 6a

FIG. 6b

EP 0 608 230 B1

FIG. 6c

FIG. 6d

FIG. 7

FIG. 8

FIG. 9